# EUROPEAN PATENT APPLICATION

(11) **EP 4 801 114 A1**
(43) Date of publication of application: **02.09.2026**
(21) Application number: 24905522.9
(22) Date of filing: 24.07.2024
(51) Int. Cl.: H04W 48/04

(54) **LOCATION UPDATE METHOD AND DEVICE, AND CHIP SYSTEM AND STORAGE MEDIUM**

(30) Priority: 19.12.2023 CN 202311763939
(71) Applicant: Honor Device Co., Ltd., Shenzhen, Guangdong 518040 (CN)
(72) Inventor: LI, Haibo, Shenzhen, Guangdong 518040 (CN)
(74) Representative: MERH-IP Matias Erny Reichl Hoffmann Patentanwälte PartG mbB
(86) International application number: PCT/CN2024/107318
(87) International publication number: WO 2025/130026

(57) **Abstract**

Embodiments of this application provide a location update method, a device, a chip system, and a storage medium. According to the method, it is set that a third timer is actively disabled and a location update procedure is re-initiated when it is identified, in a scenario in which the location update procedure fails because an RRC connection is not established, that a preset condition is met, to avoid a case in which a user equipment waits for long time, causing service anomalies of the user equipment. In this way, the user equipment experiencing an abnormal location update procedure is quickly restored to normal operation without significantly increasing burden on a network side, so that the user equipment can normally receive paging.

## Description

This application claims priority to Chinese Patent Application No. 202311763939.9, filed with the China National Intellectual Property Administration on December 19, 2023 and entitled "LOCATION UPDATE METHOD, DEVICE, CHIP SYSTEM, AND STORAGE MEDIUM", which is incorporated herein by reference in its entirety.

### TECHNICAL FIELD

This application relates to the field of communication technologies, and in particular, to a location update method, a device, a chip system, and a storage medium.

### BACKGROUND

During mobile communication, a network (Network) side needs to identify and track location information of a user equipment (User Equipment, UE), and then implement mobility management on the UE based on the location information. Therefore, when a location of the UE changes, it is necessary to notify the network side through a corresponding procedure to perform location update; otherwise, the network side cannot obtain a correct location of the UE, causing a paging failure.

However, currently, in a location update process, due to some anomalies, a location update request initiated by the UE may not arrive at the network side, that is, the location update request fails to be sent. Alternatively, the network side does not respond to the location update request initiated by the UE. Based on a current communication standard protocol, in this case, the UE starts a timer, and can initiate the location update request again only after the timer expires. Consequently, the UE cannot perform a service within timing time corresponding to the timer, and user usage is affected.

### SUMMARY

To resolve the foregoing technical problems, embodiments of this application provide a location update method, a device, a chip system, and a storage medium, to quickly restore a user equipment experiencing an abnormal location update procedure to normal operation, so that the user equipment can normally receive paging.

According to a first aspect, an embodiment of this application provides a location update method. The method is applied to a user equipment, and includes: triggering a location update procedure and starting a first timer and a second timer when the user equipment changes from camping on a first cell to camping on a second cell, where a current radio resource control RRC state of the user equipment is an idle state, duration corresponding to the second timer is greater than duration corresponding to the first timer, the duration corresponding to the first timer is duration for establishing an RRC connection between the user equipment and a core network through random access, the duration corresponding to the second timer is duration for performing the location update procedure, and the location update procedure is implemented based on the RRC connection; disabling the second timer and starting a third timer after the first timer expires when the RRC connection is not successfully established within the duration corresponding to the first timer, where duration corresponding to the third timer is duration in which the user equipment fails to perform the location update procedure since the second timer is disabled; and disabling the third timer in advance, re-triggering the location update procedure, and starting the first timer and the second timer when it is identified, within the duration corresponding to the third timer, that a preset condition is met.

The user equipment is, for example, a mobile phone, a smart watch, or the like.

Network corresponding to the first cell and the second cell may be the same or may be different.

The network may be one or more of 2G, 3G, 4G, 5G, and future network.

The first timer is a timer corresponding to an RRC establishment procedure, such as T300.

The second timer and the third timer are related to the network of the second cell.

For example, when the second cell is a cell of a 4G network, the second timer is, for example, T3430, and the third timer is, for example, T3411.

For example, when the second cell is a cell of a 5G network, the second timer is, for example, T3510, and the third timer is, for example, T3511.

It can be learned from a standard protocol that, starting the third timer is to prevent the user equipment from frequently initiating the location update procedure to a network side (that is, a network side device) (including sending a location update request to the network side). The frequently initiating the location update procedure to a network side increases burden on the network side, and even the network side may consider that a network is under attack. However, when the location update procedure is abnormal because the RRC connection is not established and the location update request is not sent to the network side at all, the network side is actually unaware that a location update action has been performed. Therefore, it is unnecessary for the user equipment to wait for the third timer to expire before re-initiating the location update procedure. Therefore, in this aspect, when the user equipment identifies, within the duration corresponding to the third timer, that the preset condition is met, the user equipment may actively disable the third timer in advance and re-initiate the location update procedure, to avoid a case in which the user equipment waits for long time, causing service anomalies of the user equipment.

Therefore, the user equipment experiencing an abnormal location update procedure is quickly restored to normal operation without significantly increasing burden on the network side, so that the user equipment can normally receive paging.

According to the first aspect, the disabling the third timer in advance when it is identified, within the duration corresponding to the third timer, that a preset condition is met includes: disabling the third timer in advance when it is identified, within the duration corresponding to the third timer, that signal quality of the second cell becomes good, or the user equipment camps on a third cell.

When the RRC connection is not established and a location update request does not arrive at a network side, it is completely unnecessary for the user equipment to wait for the third timer to expire before initiating the location update procedure. Therefore, in this scenario, after it is identified that signal quality of a currently camped cell becomes good, or the user equipment accesses a new cell, the user equipment may directly re-trigger the location update procedure, to avoid waiting for long time, causing service anomalies of the user equipment.

According to any one of the first aspect or the implementations of the first aspect, the method further includes: when the location update procedure fails because the RRC connection is not successfully established, skipping counting the location update procedure that is triggered at this time towards a total trigger count corresponding to the location update procedure.

Therefore, in a scenario in which the location update procedure fails because the RRC connection is not established, for example, corresponding requested location update is not sent to a network side, the user equipment does not count the location update procedure that is triggered at this time towards the total trigger count corresponding to the location update procedure. This can avoid a case in which the total trigger count quickly reaches a preset trigger count stipulated by a standard protocol and then a fourth timer is started. This case causes the user equipment to fail to perform the location update procedure within duration corresponding to the fourth timer, and causes the user equipment to fail to be restored to normal operation within long time, and consequently, the user equipment cannot normally receive paging.

That is, based on the implementation provided in this aspect, network rejection is avoided without significantly increasing burden on a network.

According to any one of the first aspect or the implementations of the first aspect, the method further includes: re-triggering the location update procedure and starting the first timer and the second timer after the third timer expires when it is not identified, within the duration corresponding to the third timer, that the preset condition is met.

Therefore, when it is not identified, within the duration corresponding to the third timer, that the preset condition is met, as stipulated by a current standard protocol, the location update procedure may be re-triggered after the third timer expires, to ensure that the location update procedure can be performed normally.

According to any one of the first aspect or the implementations of the first aspect, in a process of re-triggering the location update procedure, the method further includes: when the RRC connection is successfully established and the location update procedure that is re-triggered fails, counting the location update procedure that is triggered at this time towards the total trigger count corresponding to the location update procedure; and starting a fourth timer when the total trigger count is greater than a preset trigger count, where duration corresponding to the fourth timer is greater than the duration respectively corresponding to the first timer, the second timer, and the third timer. The user equipment fails to perform the location update procedure within the duration corresponding to the fourth timer.

Therefore, in a scenario in which the location update procedure fails because the RRC connection is not established, for example, corresponding requested location update is not sent to a network side, the user equipment does not count the location update procedure that is triggered at this time towards the total trigger count corresponding to the location update procedure. The count is accumulated only when the RRC connection is successfully established but the location update procedure still fails, that is, when the corresponding request is actually sent. This can avoid a case in which the total trigger count quickly reaches a preset trigger count stipulated by a standard protocol and then the fourth timer is started. This case causes the user equipment to fail to perform the location update procedure within the duration corresponding to the fourth timer, and causes the user equipment to fail to be restored to normal operation within long time, and consequently, the user equipment cannot normally receive paging.

According to any one of the first aspect or the implementations of the first aspect, network corresponding to the first cell and the second cell are different. Alternatively, the network corresponding to the first cell and the second cell are the same.

For example, the network of the first cell and the second cell may be any one of 2G, 3G, 4G, 5G, and future network.

For example, the first cell may be any one of 2G, 3G, 4G, 5G, and future network, and the network of the second cell may be any one of network except the first cell.

According to any one of the first aspect or the implementations of the first aspect, when the network corresponding to the second cell is a 4G network, the location update procedure is implemented through tracking area update TAU, the first timer is a T300 timer, the second timer is a T3430 timer, and the third timer is a T3411 timer.

According to any one of the first aspect or the implementations of the first aspect, when the network corresponding to the second cell is a 5G network, the location update procedure is implemented through a registration procedure whose type is mobile registration update MRU, the first timer is a T300 timer, the second timer is a T3510 timer, and the third timer is a T3511 timer.

According to any one of the first aspect or the implementations of the first aspect, when the network corresponding to the second cell is the 4G network, the fourth timer is a T3402 timer. Alternatively, when the network corresponding to the second cell is the 5G network, the fourth timer is a T3502 timer.

According to any one of the first aspect or the implementations of the first aspect, that it is identified that a preset condition is met includes: It is identified, when the user equipment moves rapidly, that the preset condition is met.

A rapid moving scenario is, for example, a scenario of traveling on high-speed trains, aircraft, and other transportation vehicles.

When the user equipment is in the rapid moving scenario, a cell (cell) in which the user equipment is located changes quickly. Therefore, when the location update procedure fails because a problem exists in an original cell, the problem may not exist in a new cell. Therefore, in this scenario, instead of waiting for the third timer to expire before re-initiating the location update procedure as stipulated by the protocol, when it is identified that the cell changes, the third timer is directly disabled and the location update procedure is triggered, so that the user equipment is quickly restored to normal operation, thereby ensuring normal paging.

According to any one of the first aspect or the implementations of the first aspect, the triggering a location update procedure when the user equipment changes from camping on a first cell to camping on a second cell includes: triggering the location update procedure when the user equipment camps, in a redirection manner, on the second cell from the first cell on which the user equipment camps; or triggering the location update procedure when the user equipment camps, in a reselection manner, on the second cell from the first cell on which the user equipment camps.

According to a second aspect, an embodiment of this application provides a user equipment. The user equipment includes a memory and a processor, and the memory is coupled to the processor. The memory stores computer instructions, and when the computer instructions are executed by the processor, the user equipment is enabled to execute instructions of the method in any one of the first aspect or the possible implementations of the first aspect.

According to a third aspect, an embodiment of this application provides a computer-readable medium, configured to store a computer program. The computer program includes instructions for performing the method in any one of the first aspect or the possible implementations of the first aspect.

According to a fourth aspect, an embodiment of this application provides a computer program. The computer program includes instructions for performing the method in any one of the first aspect or the possible implementations of the first aspect.

According to a fifth aspect, an embodiment of this application provides a chip system, and the chip system includes a processor. The processor is configured to support a terminal device in implementing instructions of the method in any one of the first aspect or the possible implementations of the first aspect.

According to the fifth aspect, the processor includes a modem.

Correspondingly, that the processor is configured to support a user equipment in implementing instructions of the method in any one of the first aspect or the possible implementations of the first aspect specifically includes:

that the modem is configured to support the user equipment in implementing the instructions of the method in any one of the first aspect or the possible implementations of the first aspect.

The fifth aspect and any implementation of the fifth aspect respectively correspond to the first aspect and any implementation of the first aspect. For the technical effects corresponding to the fifth aspect and any implementation of the fifth aspect, refer to the technical effects corresponding to the foregoing first aspect and any implementation of the first aspect. Details are not described herein again.

### BRIEF DESCRIPTION OF DRAWINGS

FIG. 1 is an example schematic diagram of a scenario in which a location of a UE changes and a location update procedure is triggered.
FIG. 2A and FIG. 2B are example schematic flowcharts in which a user equipment and a network side perform location update in a 4G network;
FIG. 3 is an example schematic flowchart of service interruption caused by a location update failure in a 4G network;
FIG. 4 is an example schematic flowchart of a location update method for a 4G network according to an embodiment of this application;
FIG. 5 is an example schematic flowchart of another location update method for a 4G network according to an embodiment of this application;
FIG. 6A and FIG. 6B are example schematic flowcharts in which a user equipment and a network side perform location update in a 5G network;
FIG. 7 is an example schematic flowchart of service interruption caused by a location update failure in a 5G network;
FIG. 8 is an example schematic flowchart of a location update method for a 5G network according to an embodiment of this application;
FIG. 9 is an example schematic flowchart of a location update method according to an embodiment of this application; and
FIG. 10 is an example schematic diagram of a hardware structure of an electronic device applicable to a location update method according to an embodiment of this application.

### DESCRIPTION OF EMBODIMENTS

Technical solutions in embodiments of this application are clearly and completely described in the following with reference to the accompanying drawings in the embodiments of this application. Apparently, the described embodiments are some rather than all of the embodiments of this application. All other embodiments obtained by a person of ordinary skill in the art based on the embodiments of this application without making creative efforts shall fall within the protection scope of this application.

The term "and/or" used herein describes only an association relationship for describing associated objects and represents that three relationships may exist. For example, A and/or B may represent the following three cases: Only A exists, both A and B exist, and only B exists.

In the specification and claims in the embodiments of this application, the terms "first", "second", and the like are intended to distinguish between different objects, but are not used to describe a particular order of the objects. For example, a first target object, a second target object, and the like are used to distinguish between different target objects, but are not used to describe a particular order of the target objects.

In the embodiments of this application, the term "example", "for example", or the like is used to give an example, an illustration, or a description. Any embodiment or design scheme described as an "example" or "for example" in the embodiments of this application should not be explained as being more preferred or having more advantages than another embodiment or design scheme. Exactly, use of the word such as "example" or "for example" is intended to present a related concept in a specific manner.

In descriptions of the embodiments of this application, unless otherwise stated, "a plurality of" means two or more than two. For example, a plurality of processing units mean two or more processing units, and a plurality of systems mean two or more systems.

Based on the foregoing premise, the following describes the technical solutions provided in the embodiments of this application.

Specifically, the technical solutions provided in the embodiments of this application are for a problem existing in a scenario in which after a location of a UE changes, a network side is notified through a location update procedure to perform location update.

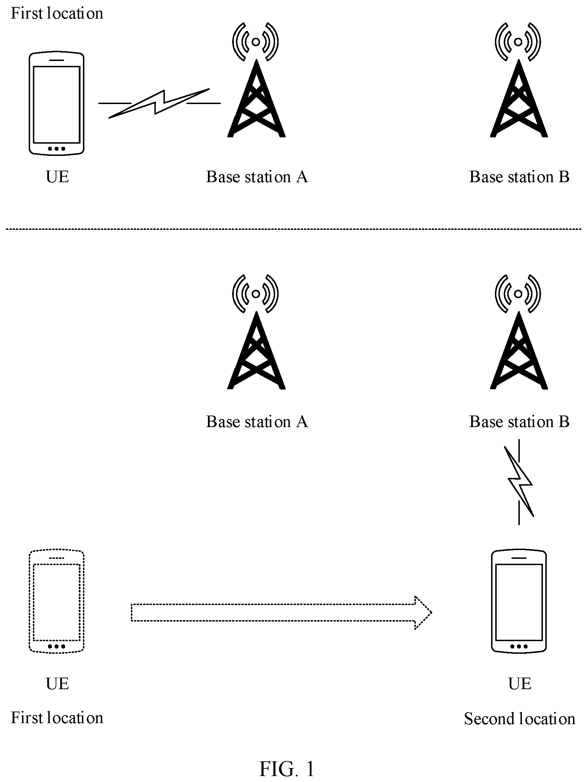

For example, a scenario in which the UE triggers the location update procedure may be shown in FIG. 1. For example, when an initial location of the UE is a first location shown in FIG. 1, a base station corresponding to a cell on which the UE camps may be a base station A. As the UE moves, the location of the UE changes from the first location to a second location shown in FIG. 1. When a base station of a cell corresponding to the second location is a base station B, the UE needs to notify, through the location update procedure and the base station B, a corresponding core network to perform location update, so that when the UE camps on the cell corresponding to the base station B, the core network can send paging information or an invite (invite) request to the UE through the base station B.

It should be understood that the foregoing descriptions are merely examples listed for a better understanding of the technical solutions of the embodiments, and are not considered as a unique limitation on the embodiments.

It should be noted that, due to different network, the location update procedures used by the UE are different. For a 2G network and a 3G network, the UE may notify core networks corresponding to the 2G network and the 3G network in a manner of location area update (Location Area Update, LAU) to perform location update. For a long term evolution (Long Term Evolution, LTE) network (a 4G network), the UE may notify a core network corresponding to the LTE network in a manner of tracking area update (tracking area update, TAU) to perform location update. For a new radio (New Radio, NR) network (a 5G network), the UE may implement location update through a registration procedure whose type (type) is mobility registration update (mobility registration update, MRU).

It can be learned from an existing standard protocol that, after the UE using these network undergoes cell reselection due to mobility, the location update process performed by the UE may include several steps such as cell reselection, random access, location update, and resource release.

To better describe the technical solutions provided in the embodiments of this application, the following separately describes the location update procedures performed by the UE and the network side by using the LTE network and the NR network as examples.

It may be understood that, a mobility management entity (Mobility Management Entity, MME) is a key control node of a 3GPP LTE network, and is responsible for a positioning and paging process of a UE in an idle mode/state (RRC_IDLE). Therefore, in a scenario of an LTE, the UE performs the location update procedure with the MME.

In addition, it may be further understood that, as a 5G network unit, an access and mobility management function (Access and Mobility Management Function, AMF) has a function similar to that of the MME of the LTE network, and is mainly responsible for functions such as registration management, connection management, access management, and mobility management. Therefore, in a scenario of an NR network, the UE performs the location update procedure with the AMF.

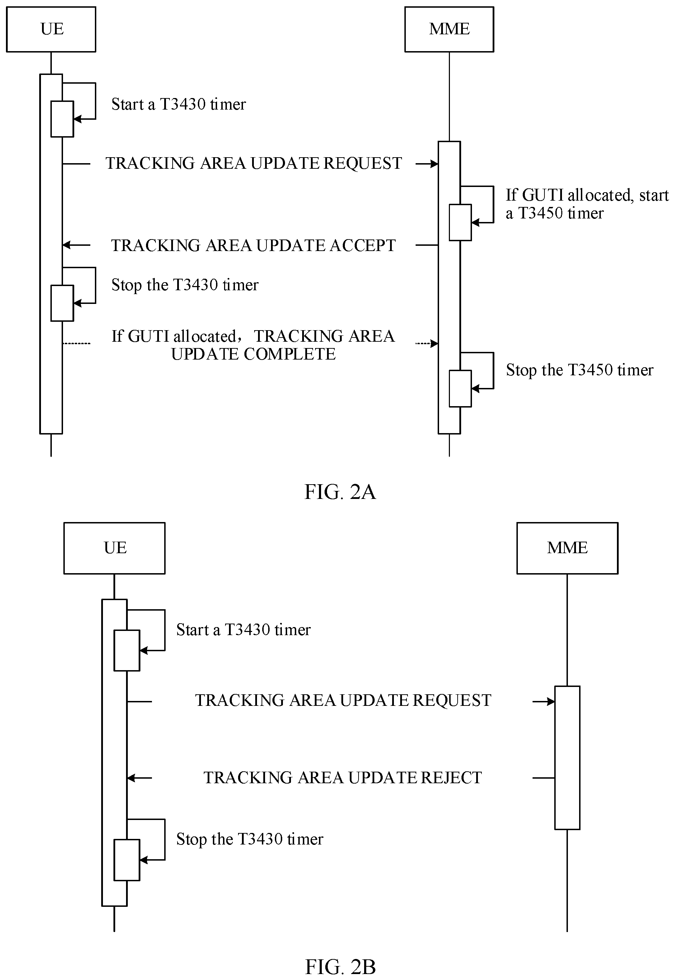

FIG. 2A and FIG. 2B are example schematic diagrams in which a UE and an MME perform a location update procedure when an LTE network is used.

As shown in FIG. 2A and FIG. 2B, when notifying the MME through TAU to perform location update, the UE may initiate TRACKING AREA UPDATE REQUEST (a TAU request) to the MME, and start a T3430 timer when initiating the TAU request.

After receiving the TAU request sent by the UE, the MME feeds back a TRACKING AREA UPDATE ACCEPT message (a TAU accept message) to the UE, as shown in FIG. 2A. Alternatively, the MME feeds back a TRACKING AREA UPDATE REJECT message (a TAU reject message) to the UE, as shown in FIG. 2B.

Correspondingly, after receiving the TAU accept message or the TAU reject message sent by the MME, the UE disables the T3430 timer, as shown in FIG. 2A and FIG. 2B.

It should be noted that, in some possible implementations, disabling a timer may also be described as stopping a timer. In the embodiments of this application, the disabling is used as an example.

In addition, it should be further noted that, in a case in which the MME makes the TAU accept message, the MME usually allocates a globally unique temporary UE identity (Globally Unique Temporary UE Identity, GUTI) to the UE. In a case in which the MME allocates the GUTI to the UE, the MME includes the GUTI in the TAU accept message when sending the TAU accept message to the UE, and starts a T3450 timer when sending the TAU accept message to the UE, as shown in FIG. 2A.

Correspondingly, when receiving the TAU accept message carrying the GUTI within duration corresponding to the T3430 timer, the UE not only disables the T3430 timer, but also sends TRACKING AREA UPDATE COMPLETE to the MME, as shown in FIG. 2A.

Correspondingly, when receiving, within duration corresponding to the T3450 timer, the TRACKING AREA UPDATE COMPLETE sent by the UE, the MME disables the T3450 timer. In this way, one location update is completed. On the contrary, if the UE does not receive, within the duration corresponding to the T3430 timer, the TAU accept message sent by the MME, and/or the MME does not receive, within the duration corresponding to the T3450 timer, the TRACKING AREA UPDATE COMPLETE sent by the UE, it is considered that the current location update procedure fails.

Still refer to FIG. 2B. For example, in a case in which the MME makes the TAU reject message, because the MME does not process the TAU request sent by the UE, the MME does not allocate the GUTI to the UE, and therefore, does not need to start the T3450 timer when sending the TAU reject message to the UE.

Correspondingly, when receiving, within the duration corresponding to the T3430 timer, the TAU reject message sent by the MME, the UE does not need to send the TRACKING AREA UPDATE COMPLETE to the MME, and can directly disable the T3430 timer. In this way, one location update is completed. On the contrary, if the UE does not receive, within the duration corresponding to the T3430 timer, the TAU reject message sent by the MME, it is considered that the current location update procedure fails.

In a case in which the UE does not receive, within the duration corresponding to the T3430 timer, a response (such as the TAU accept message shown in FIG. 2A or the TAU reject message shown in FIG. 2B) made by the MME to the TAU request, or in a case in which the UE does not send the TAU request at all within the duration corresponding to the T3430 timer due to another reason (that is, a case in which the TAU fails), as stipulated by a standard protocol corresponding to the LTE network, a T3411 timer is started, and the TAU procedure can be triggered again, that is, the UE can send the TAU request to the MME again, only after the T3411 timer expires.

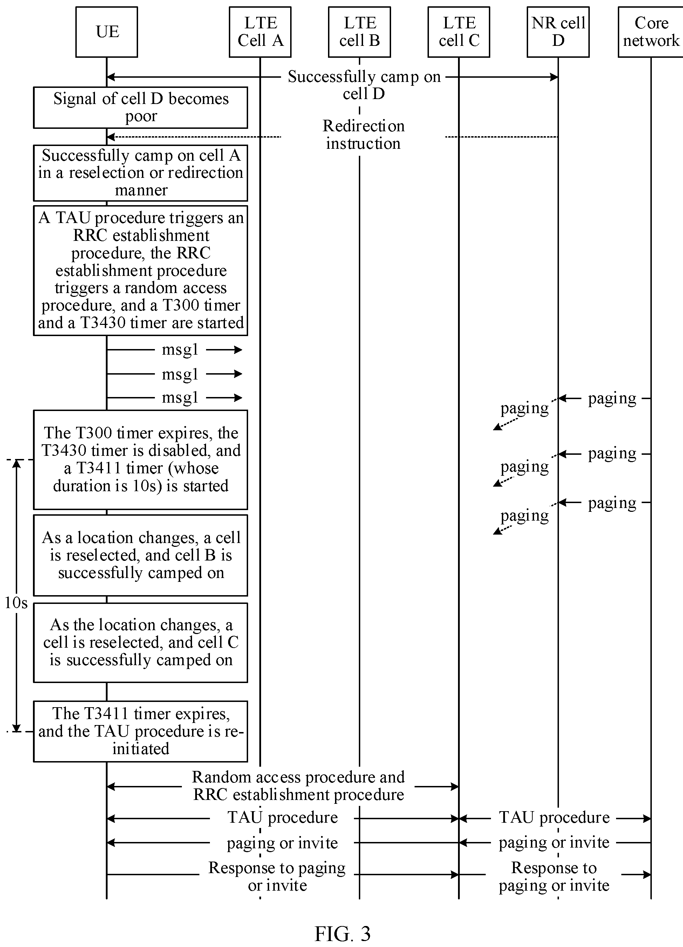

However, it can be learned from the stipulation for the T3411 timer in the standard protocol that, duration corresponding to the T3411 timer is 10 seconds (second, s). Therefore, after the TAU fails and the T3411 timer is started, service interruption of at least 10 of the UE is caused. For ease of understanding, descriptions are provided in the following with reference to FIG. 3.

Refer to FIG. 3. For example, a UE initially camps on a cell of an NR network, such as a cell D. In some possible cases, when signal quality of the cell D becomes poor (for example, the UE moves away from the cell D), the cell D may notify the UE to perform cell handover, reselection, or redirection. A cell to which the UE is handed over and redirected is guided by the network. That is, a network side may send an instruction of handover or redirection to a cell to the UE. A reselected cell is determined by the UE based on many factors such as distribution of currently detected cell signals and configuration of an inter-cell priority configuration.

The handover, reselection, and redirection are specifically described below.

### (1) Handover

The handover means that in an RRC connected state (RRC_CONNECTED), a carried service changes from being in a cell to being in another cell.

The handover may be generally divided into intra-frequency handover, inter-frequency handover, and inter-system handover.

The intra-frequency handover means that a target cell (a to-be-handed-over cell) and a current serving cell (a currently camped cell) use a same radio frequency carrier frequency. The inter-frequency handover means that the target cell and the current serving cell use different radio frequency carrier frequencies. In the two handover scenarios, the target cell and the current serving cell belong to a same communication system. For example, when a cell D on which a UE currently camps is an NR system, the to-be-handed-over cell also needs to be an NR system. On the contrary, if the cell D on which the UE currently camps is an LTE system, the to-be-handed-over cell needs to be an LTE system.

The inter-system handover refers to handover between different systems, for example, handover from the NR system to the LTE system, or handover from the LTE system to the NR system.

### (2) Reselection (which may also be described as random access)

The reselection means that in an RRC idle state (RRC_IDLE), reselection is performed from a cell to another cell.

It may be understood that, in the RRC idle state, the UE and a network side do not perform a service such as a data service or a voice service. That is, the reselection does not involve service handover.

### (3) Redirection

Similar to the handover, the redirection is also performed based on the RRC connected state, but the redirection cannot carry a previously performed service.

Still refer to FIG. 3. For example, in this embodiment, after the signal quality of the cell D becomes poor, the UE is handed over from the cell D to a cell A in an LTE network in a redirection or reselection manner.

Still refer to FIG. 3. For example, after the UE successfully camps on the cell A, a TAU procedure is triggered, to be specific, a network side is notified of a current location, so that the network side can page the UE or initiate an invite request to the UE in a correct area.

It may be understood that, a TAU request sent by the UE to the network side needs to be implemented based on an RRC connection between the UE and the network side. Therefore, when the TAU procedure is triggered after the UE camps on the cell A, an RRC establishment procedure is triggered, and the RRC establishment procedure needs to be implemented through a random access procedure.

In addition, it should be noted that, as stipulated by the standard protocol, the UE needs to start a T300 timer when sending an RRC connection request (an RRC connection request) to the currently camped cell, for example, the cell A. As stipulated by the standard protocol, the UE needs to start a T3430 timer when sending the TAU request to the network side.

Based on this, when a TAU procedure is triggered after the UE successfully camps on the cell A, an RRC establishment procedure is also triggered, thereby triggering a random access procedure. Because both the TAU procedure and the RRC establishment procedure are triggered, the UE starts the T300 timer and the T3430 timer at the same time, as shown in FIG. 3.

Duration corresponding to the T300 timer is 1s, and duration corresponding to the T3430 timer is 15s.

It should be noted that the random access procedure described in this embodiment may alternatively be referred to as a random access process.

The random access process refers to a process from a moment at which a UE sends a random access preamble to start to attempt to access a network to a moment at which a basic signaling connection is established between the UE and the network. There are two types of random access processes in the LTE network: random access with contention (contention-based random access) and random access without contention (non-contention-based random access).

Usually, when the random access procedure is triggered, the UE first initializes a process of random access with contention. In this process, the UE randomly selects a random access preamble signature (preamble signature, preamble code) to prepare for a subsequent contention resolution process.

In addition, it should be further noted that, the process of random access with contention may generally include four steps. The four steps may be implemented by using four messages: msg1, msg2, msg3, and msg4. The UE randomly selects a preamble code to initiate the msg1. After a base station receives the msg1 sent by the UE, a medium access control (Medium Access Control, MAC) layer of the base station organizes to generate a random access response (that is, the msg2). After receiving the msg2, the UE performs first scheduling transmission (that is, the msg3). After receiving the msg3, the base station sends a conflict resolution message (that is, the msg4) to the UE.

For other implementation details of the random access procedure, refer to the standard protocol. Details are not described herein.

Therefore, random access can be completed by using the msg1 to the msg4, that is, an RRC connection between the UE and the cell A can be established. In this way, the TAU procedure, such as the procedures shown in FIG. 2A and FIG. 2B, may be performed based on the RRC connection.

For example, in another possible implementation, a message sent when the UE interacts with the network side in the TAU procedure may also be considered as being in the random access procedure. That is, in this implementation, the random access procedure may further include msg5 and msg6.

The msg5 is a location update request that is sent by the UE to the base station after the UE receives the msg4 sent by the base station. The msg5 may include location information of the UE and an identifier indicating a system type.

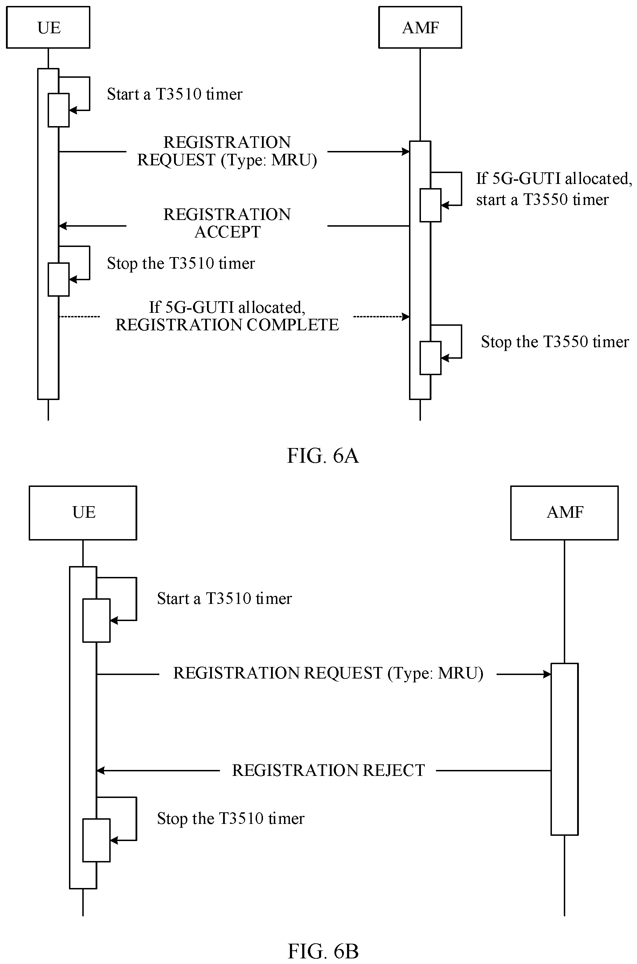

Specifically, in the LTE network, the msg5 is, for example, the TAU request shown in FIG. 2A and FIG. 2B sent by the UE. Specifically, in the NR network, the msg5 is, for example, REGISTRATION REQUEST whose type is MRU shown in FIG. 6A and FIG. 6B sent by the UE. For a specific implementation in the NR network, refer to the following embodiment. Details are not described herein.

The msg6 is a location update acknowledgement message sent by the base station to the UE. The msg6 may include identity information of the base station and an identifier indicating a system type.

Specifically, in the LTE network, the msg6 is, for example, the TAU accept message shown in FIG. 2A sent by the base station. Specifically, in the NR network, the msg6 is, for example, REGISTRATION ACCEPT shown in FIG. 6A sent by the base station. For a specific implementation in the NR network, refer to the following embodiment. Details are not described herein.

It should be understood that the foregoing descriptions are merely examples listed for a better understanding of the technical solutions of the embodiments, and are not considered as a unique limitation on the embodiments. In an actual application, the random access procedure may further include msg7. The msg7 is a random access reject message sent by the base station to the UE. The msg7 may include a reason for rejection and an identifier indicating a system type.

Still refer to FIG. 3. For example, after the UE sends the msg1 to a base station corresponding to the cell A, if the UE does not receive, within specified time, the msg2 made by the base station for the msg1, the UE re-sends the msg1 to the base station.

As stipulated by the standard protocol, in a case in which a random access step fails, the T3430 timer is processed as expiration, that is, a T3411 timer is started. Therefore, when the UE does not complete the random access and not establish the RRC connection within the duration (1s) corresponding to the T300 timer, although the T3430 timer does not expire, the UE actively disables the T3430 timer and starts the T3411 timer, as shown in FIG. 3.

As stipulated by the standard protocol, after starting the T3411 timer, the UE cannot initiate the TAU procedure within time corresponding to the T3411 timer, that is, within 10s. Therefore, even if the UE undergoes cell reselection as a location changes, for example, successfully camps on a cell B, and the UE undergoes the cell reselection again as the location changes, and re-camps on a cell C, the TAU procedure is not re-initiated before the T3411 timer expires. The UE re-initiates the TAU procedure only after the T3411 timer expires, as shown in FIG. 3.

It may be understood that the UE has not established an RRC connection to the cell C. Therefore, when the UE re-initiates the TAU procedure after the T3411 timer expires, the UE also triggers the RRC procedure and starts the T300 timer and the T3430 timer (not shown in FIG. 3).

Because the RRC connection needs to be implemented through the random access procedure, after re-initiating the TAU procedure, the UE performs the random access procedure with the cell C.

Correspondingly, after the UE and the cell C complete the random access, the RRC connection between the UE and the cell C is established, and the RRC establishment procedure is also completed.

In FIG. 3, an example in which after the T3411 expires, the random access procedure that is triggered when the UE re-initiates the TAU procedure succeeds and the UE establishes the RRC connection to the cell C is used.

Still refer to FIG. 3. For example, after the UE establishes the RRC connection to the cell C, the UE may process the TAU procedure, that is, perform the interaction shown in FIG. 2A or FIG. 2B, with a core network of LTE through a base station corresponding to the cell C. Details are not described herein again.

In FIG. 3, an example in which the TAU procedure that is re-initiated succeeds is used. In this case, if the core network initiates an operation of searching for the UE, when an RRC state of the UE is not the connected state, the core network may interact, based on location information that is reported by the UE, with the UE by initiating paging (paging) to the cell C on which the UE camps.

For example, the core network may directly initiate an invite request if the RRC state of the UE is the connected state.

Correspondingly, after receiving the paging message of the core network, the UE may make a response to the paging. After receiving the invite request of the core network, the UE may make a response to the invite.

However, after the UE starts the T3411 timer, the core network may initiate the paging to the UE within 10s. However, the TAU procedure fails after the UE camps on the cell A, and consequently, the network side does not know that the UE currently camps on the cell A, and still considers that the UE camps on the cell D. Therefore, the core network of NR sends the paging to base stations corresponding to all TAC recorded in a tracking area code list (Tracking Area Code List, TAC List) and the UE accessing these base stations, as shown in FIG. 3. However, in this case, the UE no longer camps on the cell D, and therefore, the paging message cannot arrive at the UE. As a result, the UE experiences service interruption within 10s.

It can be learned from the stipulation of the standard protocol that, a TAU procedure failure count exceeds 5, the UE needs to start a T3402 timer, and it is stipulated that the UE cannot initiate the TAU procedure until the T3402 timer expires. In this way, the UE can be prevented from frequently sending the TAU request to the network side, to avoid a signaling storm, and reduce pressure on the network side. However, the UE cannot initiate the TAU procedure within duration of 12 minutes (minute, min) of the T3402 timer, and this seriously affects services of the UE.

However, for a scenario in which the UE moves rapidly, for example, a scenario of traveling on high-speed trains, aircraft, and other transportation vehicles, the cell on which the UE camps changes quickly, an original cell has a problem, and a new cell may not have the problem, or even there is a great probability that the new cell has no problem.

Therefore, currently, such location update processing logic apparently cannot be well applied to a UE in a rapid moving scenario. In view of this, an embodiment of this application provides a location update method applicable to a UE that moves rapidly in an LTE network.

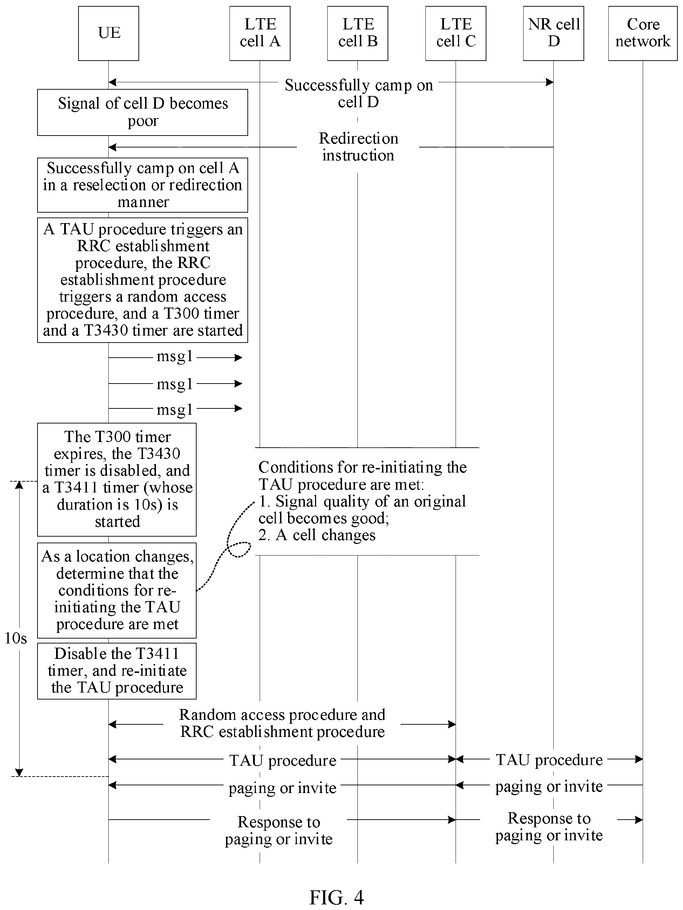

Refer to FIG. 4. For example, the UE initially camps on a cell D in an NR network, and after signal quality of the cell D becomes poor, the UE is handed over from the cell D to a cell A in the LTE network in a redirection or reselection manner.

Still refer to FIG. 4. For example, when a TAU procedure is triggered after the UE successfully camps on the cell A, an RRC establishment procedure is also triggered, thereby triggering a random access procedure, and starting a T300 timer and a T3430 timer at the same time.

Still refer to FIG. 4. For example, in this embodiment, random access fails within timing time corresponding to the T300 timer, and consequently, no RRC connection is established between the UE and the cell A. For this scenario, the UE actively disables the T3430 timer, and a T3411 timer is started according to a processing rule for expiration of the T3430 timer.

Still refer to FIG. 4. For example, specifically, in the location update method provided in this embodiment of this application, when the T3411 timer is started because RRC connection establishment fails due to a failure of the random access, the UE detects, within timing time corresponding to the T3411 timer, whether a condition for re-initiating the TAU procedure is currently met.

It should be noted that, the location update method provided in this embodiment of this application is for a scenario in which the UE moves rapidly. Therefore, in this scenario, as a location changes, a cell on which the UE camps may change quickly, and signal quality of an original cell on which the UE camps may also become good as the location changes rapidly. Therefore, in a possible implementation, meeting the condition for re-initiating the TAU procedure described in this embodiment of this application may be, for example, that the signal quality of the original cell on which the UE currently camps changes. For example, the signal quality exceeds a threshold, for example, is increased by 100 dbm. For another example, the cell on which the UE is camped changes, for example, the cell changes from the cell A that is currently camped on to a cell B or a cell C.

It should be understood that the foregoing descriptions are merely examples listed for a better understanding of the technical solutions of the embodiments, and are not considered as a unique limitation on the embodiments.

Still refer to FIG. 4. For example, in the location update method provided in this embodiment of this application, when determining that the condition for re-initiating the TAU procedure is currently met, the UE may actively disable the T3411 timer, and immediately re-initiate the TAU procedure (currently, as stipulated by a 4G standard protocol, the UE does not actively disable the T3411 timer, and can re-initiate the TAU procedure only after the T3411 timer expires, where a 5G network or another network is similar to this).

For ease of description, in this embodiment, an example in which the cell on which the UE camps changes from the cell A to the cell C is used.

After the UE re-initiates the TAU procedure, if the TAU procedure still fails, the T3411 timer may be restarted. After the T3411 timer is started, whether to wait for the T3411 timer to expire before re-initiating the TAU procedure, or to immediately disable the T3411 timer and re-initiate the TAU procedure after it is identified that signal quality of a currently camped cell becomes good or the camped cell changes, may be determined based on a reason for starting the T3411 timer.

For example, in a possible implementation, if the re-initiated TAU procedure still fails due to the failure of the random access and no RRC connection is establish, that is, a TAU request is not sent to a network side at all, the T3411 timer may be immediately disabled and the TAU procedure may be re-initiated after it is identified that the signal quality of the currently camped cell becomes good or the camped cell changes. On the contrary, if the TAU procedure has arrived at the network side, but fails due to another reason, the TAU procedure may be initiated after the T3411 timer expires, to avoid frequently initiating the TAU request to the network side and causing pressure on the network.

In the scenario in which the UE moves rapidly, for example, a scenario of traveling on high-speed trains, aircraft, and other transportation vehicles, the UE moves a long distance in short time, it takes short time for the cell on which the UE camps to change from the cell A to the cell C, and the time does not reach 10s at all. Therefore, it is set that after identifying that the signal quality of the currently camped cell becomes good or the camped cell changes, the UE immediately disables the T3411 timer (disables the T3411 timer in advance before the T3411 timer expires), and re-initiates the TAU procedure. In this way, the UE does not need to wait for the T3411 timer to expire, that is, to wait for 10s before re-initiating the TAU procedure. This can shorten service interruption time of the UE, and ensure that paging, an invite request, and the like can normally arrive at the UE.

In addition, in a scenario in which an RRC connection is not established at all due to the failure of the random access, the TAU request does not arrive at the network side at all (the TAU request fails to be sent through the RRC connection). Therefore, when the foregoing condition for re-initiating the TAU procedure is met, the T3411 timer is immediately disabled, and the TAU procedure is re-initiated, without increasing burden on the network side.

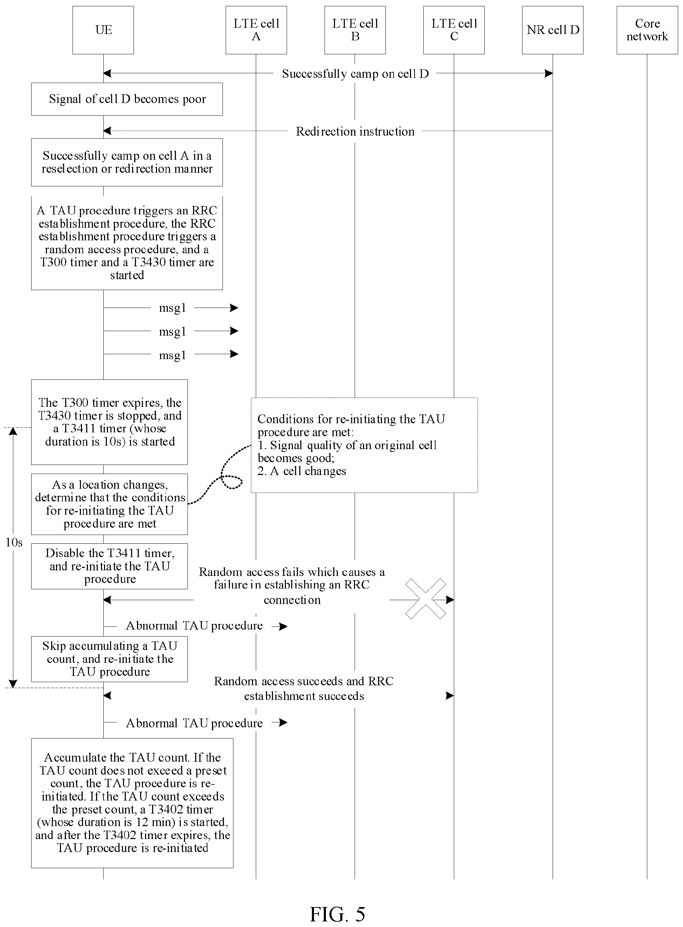

It can be learned from the foregoing descriptions that, as stipulated by the standard protocol, when a TAU procedure failure count exceeds 5, the UE needs to start a T3402 timer, and it is stipulated that the UE cannot initiate the TAU procedure again until the T3402 timer expires (12 min). However, based on the location update method provided in this embodiment of this application, in a possible implementation, in a case in which a reason for a TAU procedure failure is that RRC is not successfully established due to the failure of the random access, a TAU count may not be accumulated, and the TAU procedure is initiated again when the foregoing condition for re-initiating the TAU procedure is met, as shown in FIG. 5.

Still refer to FIG. 5. For example, when the RRC connection is successfully established, if the TAU procedure still fails, as stipulated by the standard protocol, the TAU count may be accumulated, and the TAU procedure may be re-initiated when the accumulated TAU count does not exceed a preset count. On the contrary, when the accumulated TAU count exceeds the preset count, the T3402 timer is started, and the TAU procedure is not initiated again until the T3402 timer expires, as shown in FIG. 5.

Therefore, in a scenario in which the TAU request is not sent to the network side at all because the RRC connection is not established, a TAU procedure count for this reason is not accumulated, so that five opportunities stipulated by the standard protocol cannot be wasted, and the T3402 timer is not started. In a scenario in which the RRC connection is successfully established, a failed TAU procedure count is accumulated, that is, the count is accumulated only for a TAU request that is actually sent. Therefore, location update can be performed in time without increasing burden on the network side, thereby avoiding long time of service interruption, and enabling the user equipment to be restored to normal operation in time and receive paging.

In addition, it should be noted that, the TAU procedure described in this embodiment of this application may be understood as complete interaction between the UE and the MME shown in FIG. 2A and FIG. 2B. The TAU request is a request sent by the UE to the MME when the UE triggers the TAU procedure.

FIG. 6A and FIG. 6B are example schematic diagrams in which a UE and an AMF perform a location update procedure when an NR network is used.

As shown in FIG. 6A and FIG. 6B, when notifying the AMF through a registration procedure (which is subsequently expressed as an MRU procedure) whose type (type) is MRU to perform location update, the UE may initiate, to the AMF, REGISTRATION REQUEST (a registration request) (which is subsequently expressed as an MRU request, where the MRU request is a step in the MRU procedure) whose type is the MRU, and start a T3510 timer when initiating the MRU request.

After receiving the MRU request sent by the UE, the AMF feeds back a REGISTRATION ACCEPT message (a registration accept message) to the UE, as shown in FIG. 6A. Alternatively, the AMF feeds back a REGISTRATION REJECT message (a registration reject message) to the UE, as shown in FIG. 6B.

Correspondingly, after receiving the registration accept message or the registration reject message sent by the AMF, the UE disables the T3510 timer, as shown in FIG. 6A and FIG. 6B.

It should be noted that in a case in which the AMF makes the registration accept message, the AMF also allocates a GUTI to the UE. In a case in which the AMF allocates the GUTI to the UE, the AMF includes the GUTI in the registration accept message when sending the registration accept message to the UE, and starts a T3550 timer when sending the registration accept message to the UE, as shown in FIG. 6A.

Correspondingly, when receiving the registration accept message carrying the GUTI within duration corresponding to the T3510 timer, the UE not only disables the T3510 timer, but also sends REGISTRATION COMPLETE to the AMF, as shown in FIG. 6A.

Correspondingly, when receiving, within duration corresponding to the T3550 timer, the REGISTRATION COMPLETE sent by the UE, the AMF disables the T3550 timer. In this way, one location update is completed. On the contrary, if the UE does not receive, within the duration corresponding to the T3510 timer, the registration accept message sent by the AMF, and/or the AMF does not receive, within the duration corresponding to the T3550 timer, the REGISTRATION COMPLETE sent by the UE, it is considered that the current location update procedure fails.

Still refer to FIG. 6B. For example, in a case in which the AMF makes the registration reject message, because the AMF does not process the MRU request sent by the UE, the AMF does not allocate the GUTI to the UE, and therefore, does not need to start the T3550 timer when sending the registration reject message to the UE.

Correspondingly, when receiving, within the duration corresponding to the T3510 timer, the registration reject message sent by the AMF, the UE does not need to send the REGISTRATION COMPLETE to the AMF, and can directly disable the T3510 timer. In this way, one location update is completed. On the contrary, if the UE does not receive, within the duration corresponding to the T3510 timer, the registration reject message sent by the AMF, it is considered that the current location update procedure fails.

In a case in which the UE does not receive, within the duration corresponding to the T3510 timer, a response (such as the registration accept message shown in FIG. 6A or the registration reject message shown in FIG. 6B) made by the AMF to the MRU request, or in a case in which the UE does not send the MRU request at all within the duration corresponding to the T3510 timer due to another reason (that is, a case in which the MRU fails), as stipulated by a standard protocol corresponding to an NR network, a T3511 timer is started, and the MRU procedure can be triggered again, that is, the UE can send the MRU request to the AMF again, only after the T3511 timer expires.

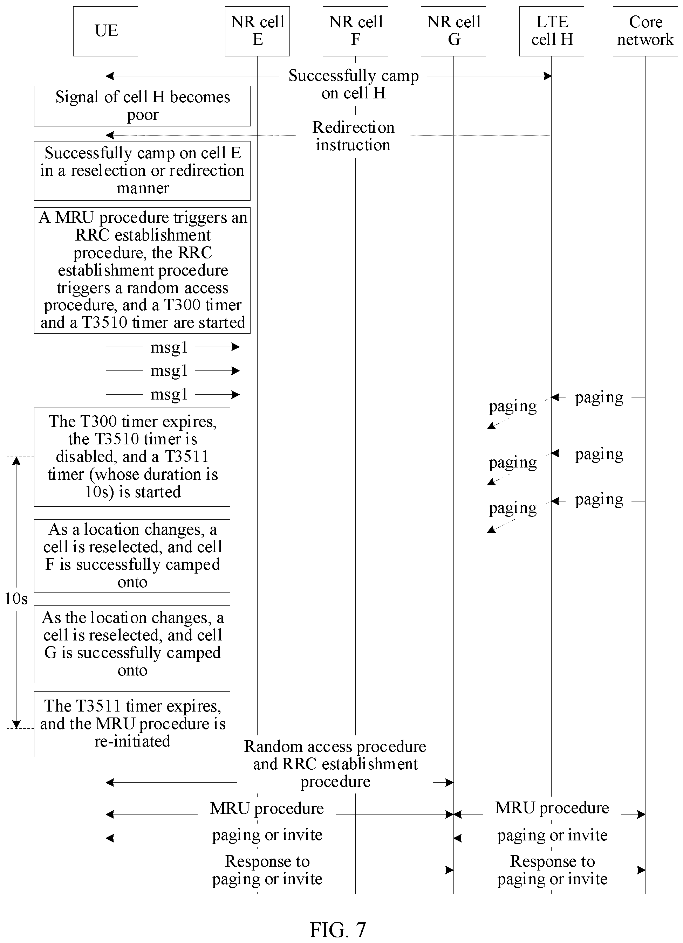

However, it can be learned from the stipulation for the T3511 timer in the standard protocol that, duration corresponding to the T3511 timer is 10s. Therefore, after the MRU fails and the T3511 timer is started, service interruption of at least 10s of the UE is caused. For ease of understanding, descriptions are provided in the following with reference to FIG. 7.

Refer to FIG. 7. For example, the UE initially camps on a cell of an LTE network, such as a cell H. In some possible cases, when signal quality of the cell H becomes poor (for example, the UE moves away from the cell H), the cell H may notify the UE to perform cell handover, reselection, or redirection.

For descriptions about the handover, reselection, and redirection, refer to the foregoing embodiment part. Details are not described herein again.

Still refer to FIG. 7. For example, in this embodiment, after the signal quality of the cell H becomes poor, the UE is handed over from the cell H to a cell E in the NR network in a redirection or reselection manner.

Still refer to FIG. 7. For example, after the UE successfully camps on the cell E, the MRU procedure is triggered, to be specific, a network side is notified of a current location, so that the network side can page the UE or initiate an invite request to the UE in a correct area.

It may be understood that the MRU request sent by the UE to the network side, like the TAU request type in the LTE network, also needs to be implemented based on an RRC connection between the UE and the network side. Therefore, when the MRU procedure is triggered after the UE camps on the cell E, an RRC establishment procedure is triggered, and the RRC establishment procedure needs to be implemented through a random access procedure.

Based on this, when the MRU procedure is triggered after the UE successfully camps on the cell E, an RRC establishment procedure is also triggered, thereby triggering a random access procedure. Because both the MRU procedure and the RRC establishment procedure are triggered, the UE starts the T300 timer and the T3510 timer at the same time, as shown in FIG. 7.

Duration corresponding to the T300 timer is 1s, and duration corresponding to the T3510 timer is 15s.

Steps of the random access procedure performed by the UE and a base station corresponding to the cell E that is currently camped on in the NR network are the same as steps in the LTE network. For specific implementation details, refer to the part described for the random access procedure in the embodiment shown in FIG. 4. Details are not described herein again.

Still refer to FIG. 7. For example, after the UE sends msg1 to the base station corresponding to the cell E, if the UE does not receive, within specified time, msg2 made by the base station for the msg1, the UE re-sends the msg1 to the base station.

As stipulated by the standard protocol, in a case in which a random access step fails, the T3510 timer is processed as expiration, that is, a T3511 timer is started. Therefore, when the UE does not complete the random access and not establish the RRC connection within the duration (1s) corresponding to the T300 timer, although the T3510 timer does not expire, the UE actively disables the T3510 timer and starts the T3511 timer, as shown in FIG. 7.

As stipulated by the standard protocol, after starting the T3511 timer, the UE cannot initiate the MRU procedure within time corresponding to the T3511 timer, that is, within 10s. Therefore, even if the UE undergoes cell reselection as a location changes, for example, successfully camps on a cell F, and the UE undergoes the cell reselection again as the location changes, and re-camps on a cell G, the MRU procedure is not re-initiated before the T3511 timer expires. The UE re-initiates the MRU procedure only after the T3511 timer expires, as shown in FIG. 7.

It may be understood that the UE has not established an RRC connection to the cell G. Therefore, when the UE re-initiates the MRU procedure after the T3511 timer expires, the UE also triggers the RRC procedure and starts the T300 timer and the T3510 timer (not shown in FIG. 7).

Because the RRC connection needs to be implemented through the random access procedure, after re-initiating the MRU procedure, the UE performs the random access procedure with the cell G.

Correspondingly, after the UE and the cell G complete the random access, the RRC connection between the UE and the cell C is established, and the RRC establishment procedure is also completed.

In FIG. 7, an example in which after the T3511 expires, the random access procedure that is triggered when the UE re-initiates the MRU procedure succeeds and the UE establishes the RRC connection to the cell G is used.

Still refer to FIG. 7. For example, after the UE establishes the RRC connection to the cell G, the UE may process the MRU procedure, that is, perform the interaction shown in FIG. 6A or FIG. 6B, with a core network of NR through a base station corresponding to the cell G. Details are not described herein again.

In FIG. 7, an example in which the MRU procedure that is re-initiated succeeds is used. In this case, if the core network initiates an operation of searching for the UE, when an RRC state of the UE is not the connected state, the core network may implement interaction with the UE by initiating paging (paging) to the cell G on which the UE camps according to location information that is reported by the UE.

For example, the core network may directly initiate an invite request if the RRC state of the UE is the connected state.

Correspondingly, after receiving the paging message of the core network, the UE may make a response to the paging. After receiving the invite request of the core network, the UE may make a response to the invite.

Then, after the UE starts the T3511 timer, the core network may initiate the paging to the UE within 10s. However, the MRU procedure fails after the UE camps on the cell E, and consequently, the network side does not know that the UE currently camps on the cell E, and still considers that the UE camps on the cell H. Therefore, the core network of LTE sends the paging to base stations corresponding to all TAC recorded in a tracking area code list (Tracking Area Code List, TAC List) as well as the UE accessing these base stations, as shown in FIG. 7. However, in this case, the UE no longer camps on the cell H, and therefore, the paging message cannot arrive at the UE. As a result, during these 10s, the UE experienced a service interruption issue.

It can be learned from the stipulation of the standard protocol that, an MRU procedure failure count exceeds 5, the UE needs to start a T3502 timer, and it is stipulated that the UE cannot initiate the MRU procedure until the T3502 timer expires. In this way, the UE can be prevented from frequently sending the MRU request to the network side, to avoid a signaling storm, and reduce pressure on the network side. However, duration of 12min of the T3502 timer seriously affects services of the UE.

However, for a scenario in which the UE moves rapidly, for example, a scenario of traveling on high-speed trains, aircraft, and other transportation vehicles, the cell on which the UE camps changes quickly, an original cell has a problem, and a new cell may not have the problem, or even there is a great probability that the new cell has no problem.

Therefore, currently, such location update processing logic apparently cannot be well applied to a UE in a rapid moving scenario. In view of this, an embodiment of this application provides a location update method applicable to a UE that moves rapidly in an LTE network.

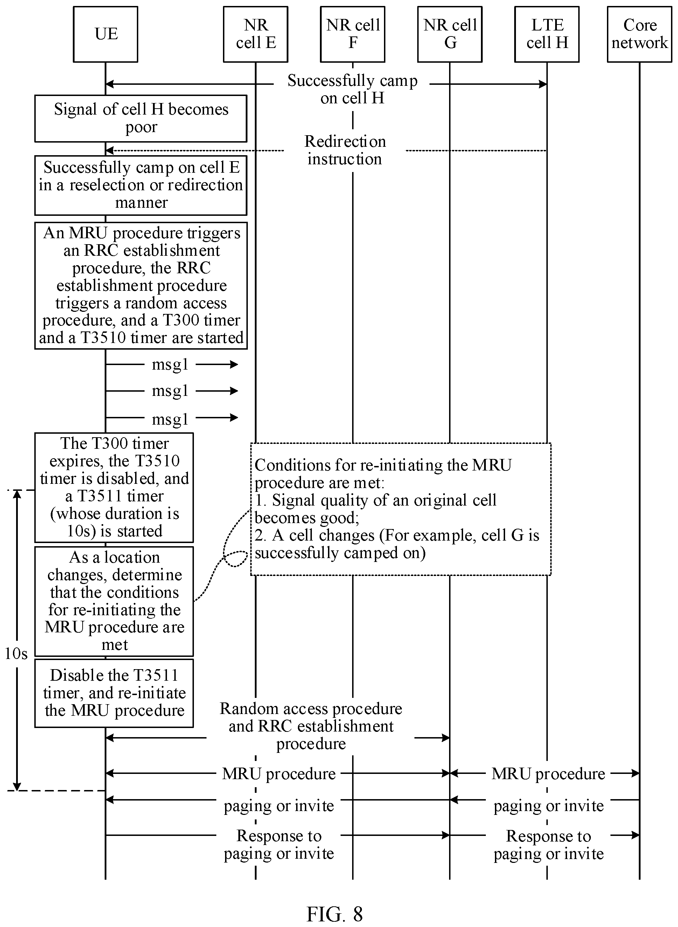

Refer to FIG. 8. For example, the UE initially camps on a cell H in a LTE network and after signal quality of the cell H becomes poor, the UE reselects or redirects from the cell H to a cell E in an NR network.

Still refer to FIG. 8. For example, when an MRU procedure is triggered after the UE successfully camps on the cell E, an RRC establishment procedure is also triggered, thereby triggering a random access procedure, and starting a T300 timer and a T3510 timer at the same time.

Still refer FIG. 8. For example, in this embodiment, the random access fails within timing time corresponding to the T300 timer, and consequently, no RRC connection is established between the UE and the cell E. For this scenario, the UE actively disables the T3510 timer, and a T3511 timer is started according to a processing rule for expiration of the T3510 timer.

Still refer to FIG. 8. For example, specifically, in the location update method provided in this embodiment of this application, when the T3511 timer is started because RRC connection establishment fails due to a failure of the random access, the UE detects, within timing time corresponding to the T3511 timer, whether a condition for re-initiating the MRU procedure is currently met.

It should be noted that, the location update method provided in this embodiment of this application is for a scenario in which the UE moves rapidly. Therefore, in this scenario, as a location changes, a cell on which the UE camps may change quickly, and signal quality of an original cell on which the UE camps may also become good as the location changes rapidly. Therefore, in a possible implementation, meeting the condition for re-initiating the MRU procedure described in this embodiment of this application may be, for example, that the signal quality of the original cell on which the UE currently camps changes. For example, the signal quality exceeds a threshold, for example, is increased by 100 dbm. For another example, the cell on which the UE is camped changes, for example, the cell changes from the cell E that is currently camped on to a cell F or a cell G.

It should be understood that the foregoing descriptions are merely examples listed for a better understanding of the technical solutions of the embodiments, and are not considered as a unique limitation on the embodiments.

Still refer to FIG. 8. For example, in the location update method provided in this embodiment of this application, when determining that the condition for re-initiating the MRU procedure is currently met, the UE may actively disable the T3511 timer, and immediately re-initiate the MRU procedure (currently, as stipulated by a 5G standard protocol, the UE does not actively disable the T3511 timer, and can re-initiate the MRU procedure only after the T3511 timer expires, where A 4G network or another network is similar to this).

For ease of description, in this embodiment, an example in which a cell on which the UE camps changes from the cell E to the cell G is used.

After the UE re-initiates the MRU procedure, if the TAU procedure still fails, the T3511 timer may be restarted. After the T3511 timer is started, whether to wait for the T3511 timer to expire before re-initiating the MRU procedure, or to immediately disable the T3511 timer and re-initiate the MRU procedure after it is identified that signal quality of a currently camped cell becomes good or the camped cell changes, may be determined based on a reason for starting the T3511 timer.

For example, in a possible implementation, if the re-initiated MRU procedure still fails due to the failure of the random access and no RRC connection is establish, that is, a MRU request is not sent to a network side at all, the T3511 timer may be immediately disabled and the MRU procedure may be re-initiated after it is identified that the signal quality of the currently camped cell becomes good or the camped cell changes. On the contrary, if the MRU procedure has arrived at the network side, but fails due to another reason, the MRU procedure may be initiated after the T3511 timer expires, to avoid frequently initiating the TAU request to the network side and causing pressure on the network.

In the scenario in which the UE moves rapidly, for example, a scenario of traveling on high-speed trains, aircraft, and other transportation vehicles, the UE moves a long distance in short time, it takes short time for the cell on which the UE camps to change from the cell E to the cell G, and the time does not reach 10s at all. Therefore, it is set that after identifying that the signal quality of the currently camped cell becomes good or the camped cell changes, the UE immediately disables the T3511 timer (disables the T3511 timer in advance before the T3511 timer expires), and re-initiates the MRU procedure. In this way, the UE does not need to wait for the T3511 timer to expire, that is, to wait for 10s before re-initiating the MRU procedure. This can shorten service interruption time of the UE, and ensure that paging, an invite request, and the like can normally arrive at the UE.

In addition, in a scenario in which an RRC connection is not established at all due to the failure of the random access, the MRU request does not arrive at the network side at all (the MRU request fails to be sent through the RRC connection). Therefore, when the foregoing condition for re-initiating the MRU procedure is met, the T3511 timer is immediately disabled, and the MRU procedure is re-initiated, without increasing burden on the network side.

It can be learned from the foregoing descriptions that, as stipulated by the standard protocol, when a MRU procedure failure count exceeds 5, the UE needs to start a T3502 timer, and it is stipulated that the UE cannot initiate the MRU procedure again until the T3502 timer expires (12 min). However, based on the location update method provided in this embodiment of this application, in a possible implementation, in a case in which a reason for a MRU procedure failure is that RRC is not successfully established due to the failure of the random access, a MRU count may not be accumulated, and the MRU procedure is initiated again when the foregoing condition for re-initiating the MRU procedure is met.

In addition, it should be noted that, to not increase pressure on the network side, when the RRC connection is successfully established, if the MRU procedure still fails, as stipulated by the standard protocol, the MRU count may be accumulated, and the MRU procedure may be re-initiated when the accumulated MRU count does not exceed a preset count. On the contrary, when the accumulated MRU count exceeds the preset count, the T3502 timer is started, and the MRU procedure is not initiated again until the T3502 timer expires.

Therefore, in a scenario in which the MRU request is not sent to the network side at all because the RRC connection is not established, a MRU procedure count for this reason is not accumulated, so that five opportunities stipulated by the standard protocol cannot be wasted, and the T3502 timer is not started. In a scenario in which the RRC connection is successfully established, a failed MRU procedure count is accumulated, that is, the count is accumulated only for a MRU request that is actually sent. Therefore, location update can be performed in time without increasing burden on the network side, thereby avoiding long time of service interruption, and enabling the user equipment to be restored to normal operation in time and receive paging.

It should be understood that, in the foregoing description of the location update method provided in this embodiment of this application, only an LTE (4G) network and an NR (5G) network are used as an example. In an actual application, the method is also applicable to a second-generation wireless telephone technology (2-Generation wireless telephone technology, 2G) network and a third-generation wireless telephone technology (3-Generation wireless telephone technology, 3G) network. When the location update occurs in a 2G network or a 3G network, the location update may be implemented through a location area update (Location Area Update, LAU) procedure.

In addition, it should be understood that, in an actual application, the method only can be applicable not only between different communication networks, for example, a scenario of handover from a cell in an NR network to a cell in an LTE network, or a scenario of handover from a cell in an LTE network to a cell in an NR network, but also within the same communication networks, for example, reselection from a cell of an LTE network to a cell of the LTE network, or reselection from a cell of an NR network to a cell of the NR network.

It should be noted that in a process of cell reselection in a same communication network, it is necessary to perform location update based on the location update method provided in this embodiment of this application under specific conditions.

For example, in a scenario of reselecting a cell in the LTE network (camping on a cell in the LTE network before reselection, and camping on another cell in the LTE network after reselection), a TAU procedure needs to be triggered only when a tracking area code (Tracking Area Code, TAC) of the reselected cell is not in an original TAC list (TAC List), so that the location update is perform based on the location update method provided in this embodiment of this application.

For another example, in a scenario of reselecting a cell in the NR network (camping on a cell in the NR network before reselection, and camping on another cell in the NR network after reselection), an MRU procedure needs to be triggered only when a tracking area code (Tracking Area Code, TAC) of the reselected cell is not in an original TAC list (TAC List), so that the location update is perform based on the location update method provided in this embodiment of this application.

In addition, it should be further understood that, with development of communication technologies, in future next-generation communication technologies, for example, 6G, if based on a standard protocol, a location update process performed by a user equipment in these networks also includes steps such as cell reselection, random access, location update, and resource release, the location update method provided in this embodiment of this application is also applicable.

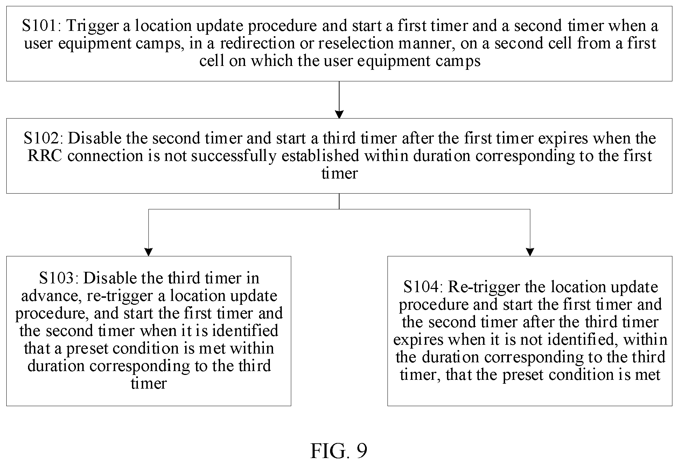

Specifically, a location update method applicable to a UE that moves rapidly in different networks is shown in FIG. 9, and specifically includes the following steps.

S101: Trigger a location update procedure and start a first timer and a second timer when a user equipment from a first cell on which the user equipment camps in a redirection or reselection manner.

The user equipment is, for example, a mobile phone, a smart watch, a tablet computer, or the like, and examples are not listed one by one herein. This is not limited in this application.

Network corresponding to the first cell and the second cell may be the same or may be different.

The network may include, for example, 2G, 3G, 4G, 5G, and a future next-generation communication network such as 6G.

For example, for a scenario in which network corresponding to the first cell and the second cell are the same, the first cell and the second cell may be any one of the network listed above.

For example, for a scenario in which network corresponding to the first cell and the second cell are different, the first cell may be any one of the network listed above, and the second cell may be a network from the network listed above other than the network corresponding to the first cell.

It should be understood that the foregoing descriptions are merely examples listed for a better understanding of the technical solutions of this embodiment, and are not considered as a unique limitation on this embodiment.

The first timer is a T300 timer that needs to be started when an RRC connection is established.

For example, when the second cell on which the user equipment currently camps is a cell of an LTE network, such as a cell A, a cell B, or a cell C in the foregoing embodiment, the second timer is a T3430 timer. When the second cell is a cell of an NR network, such as a cell E, a cell F, or a cell G described in the foregoing embodiment, the second timer is a T3510 timer.

S102: Disable the second timer and start a third timer after the first timer expires when the RRC connection is not successfully established within duration corresponding to the first timer.

When the second cell on which the user equipment currently camps is a cell of an LTE network, for example, a cell A, a cell B, or a cell C in the foregoing embodiments, the third timer is a T3411 timer. When the second cell is a cell of an NR network, such as a cell E, a cell F, or a cell G described in the foregoing embodiment, the second timer is a T3511 timer.

S103: Disable the third timer in advance, re-trigger a location update procedure, and start the first timer and the second timer when it is identified that a preset condition is met within duration corresponding to the third timer.

That a preset condition is met is, for example, that signal quality of an original cell in the foregoing embodiment becomes good, or the cell changes.

It can be known from the descriptions of the foregoing embodiments applicable to an LTE network and an NR network that, for different networks, the location update procedures are different.

For example, when the network corresponding to the second cell is an LTE network, the location update procedure is implemented through tracking area update TAU.

For example, the first cell is the cell D described in the foregoing embodiment, and the second cell may be the cell A, the cell B, or the cell C described in the foregoing embodiment. In this scenario, the location update procedure is, for example, a TAU procedure initiated for the first time when the UE camps on the cell A in the embodiment shown in FIG. 4 or FIG. 5. The re-triggered location update procedure is, for example, a TAU procedure initiated after the T3411 timer is actively disabled when a re-initiation condition is met.

For example, when the network corresponding to the second cell is an NR network, the location update procedure is implemented through a registration procedure whose Type is MRU.

For example, the first cell is the cell H described in the foregoing embodiment, and the second cell may be the cell E, the cell F, or the cell G described in the foregoing embodiment. In this scenario, the location update procedure is, for example, an MRU procedure initiated for the first time when the UE camps on the cell A in the embodiment shown in FIG. 8. The re-triggered location update procedure is, for example, an MRU procedure initiated after the T3511 timer is actively disabled when a re-initiation condition is met.

S104: Re-trigger the location update procedure and start the first timer and the second timer after the third timer expires when it is not identified, within the duration corresponding to the third timer, that the preset condition is met.

For example, using an example in which the first cell is the cell D described in the foregoing embodiment, the second cell may be the cell A, the cell B, or the cell C described in the foregoing embodiment. In this scenario, the third location procedure is, for example, a TAU procedure initiated after the T3411 expires.

Therefore, it is set that a third timer is actively disabled and a location update procedure is re-initiated when it is identified, in a scenario in which the location update procedure fails because an RRC connection is not established, that a preset condition is met, to avoid a case in which a user equipment waits for long time, causing service anomalies of the user equipment. In this way, the user equipment experiencing an abnormal location update procedure is quickly restored to normal operation without significantly increasing burden on a network side, so that the user equipment can normally receive paging.

In addition, in some possible implementations, it may be set that the location update procedure that is triggered at this time is not counted towards a total trigger count corresponding to the location update procedure when the location update procedure fails because the RRC connection is not successfully established. When the RRC connection is successfully established and the location update procedure that is re-triggered fails, the location update procedure that is triggered at this time is counted towards the total trigger count corresponding to the location update procedure. A fourth timer is started when the total trigger count is greater than a preset trigger count. Duration corresponding to the fourth timer is greater than the duration respectively corresponding to the first timer, the second timer, and the third timer.

In an LTE network, the fourth timer is T3402. In an NR network, the fourth timer is T3502.

Therefore, in a scenario in which the location update procedure fails because the RRC connection is not established, for example, corresponding requested location update is not sent to a network side, the user equipment does not count the location update procedure that is triggered at this time towards the total trigger count corresponding to the location update procedure. The count is accumulated only when the RRC connection is successfully established but the location update procedure still fails, that is, when the corresponding request is actually sent. This can avoid a case in which the total trigger count quickly reaches a preset trigger count stipulated by the standard protocol and then the fourth timer is started. This case causes the user equipment to fail to perform the location update procedure within duration corresponding to the fourth timer, and causes the user equipment to fail to be restored to normal operation within long time, and consequently, the user equipment cannot normally receive paging.

That is, based on the implementation provided in this aspect, network rejection is avoided without significantly increasing burden on a network.

For details that are not elaborated in this embodiment, refer to the part described for the foregoing embodiments of the LTE network and the NR network. Details are not described herein again.

In addition, it should be noted that, in some possible implementations, the location update method provided in this embodiment of this application may also be applicable to cell handover, that is, a scenario of handover from a cell to another cell when an RRC state is in a connected state.

It may be understood that the handover refers to a change from a cell to another cell when the RRC is in the connected state (RRC_CONNECTED). Therefore, in a process in which the UE camps from a cell on which the UE currently camps (for example, the first cell) to a target serving cell (for example, the second cell) in a handover manner, because there is an RRC connection, when a location update procedure, for example, a TAU procedure in an LTE network or an MRU procedure in an NR network, is triggered, an RRC establishment procedure does not need to be performed, and only a random access process and a location update procedure are performed.

Using cell handover in the LTE network as an example,, when the random access process and the TAU procedure are triggered after the UE changes its camped cell, the started first timer is specifically a T304 timer, and the second timer is still a T3430 timer.

In addition, it should be further noted that, if the random access fails, the cell handover also fails. In this case, the UE triggers a radio link failure (Radio Link Failure, RLF) procedure. In an RLF procedure, a cell is first reselected, and then an RRC re-establishment procedure is initiated. If the RRC re-establishment procedure fails due to a reason such as random access, the UE starts a T3411 timer. In this way, there is a problem that when the redirection or reselection manner in the foregoing embodiment is used to camp on the second cell, because the RRC connection fails due to a reason such as random access, and then the T3411 timer is started, the UE cannot perform a service within at least 10s.

Therefore, in a possible implementation, when the UE changes its camped cell in the handover manner, after the T3411 timer is started because the RRC re-establishment procedure fails due to a reason such as random access, it is also possible to enable, based on the location update method provided in the foregoing embodiment, a UE meeting a condition for re-initiating a TAU procedure to actively disable the T3411 timer, and immediately initiate the TAU procedure, to recover a service of the UE as soon as possible.

In addition, it should be understood that, the above is a description of the location update of a cell in the handover manner using the LET network scenario as an example Similarly, for the NR network, it is also possible that a timer corresponding to the NR network is started in a handover process according to the existing standard, and a T3511 timer is started after the RRC re-establishment procedure fails due to a reason such as random access. For specific implementation details, refer to the foregoing embodiment, and details are not described herein again.

To better understand the technical solutions provided in the embodiments of this application, that the user equipment is a mobile phone is used as an example. Based on a hardware structure of the mobile phone, hardware involved in implementing the location update method provided in the embodiments of this application is described.

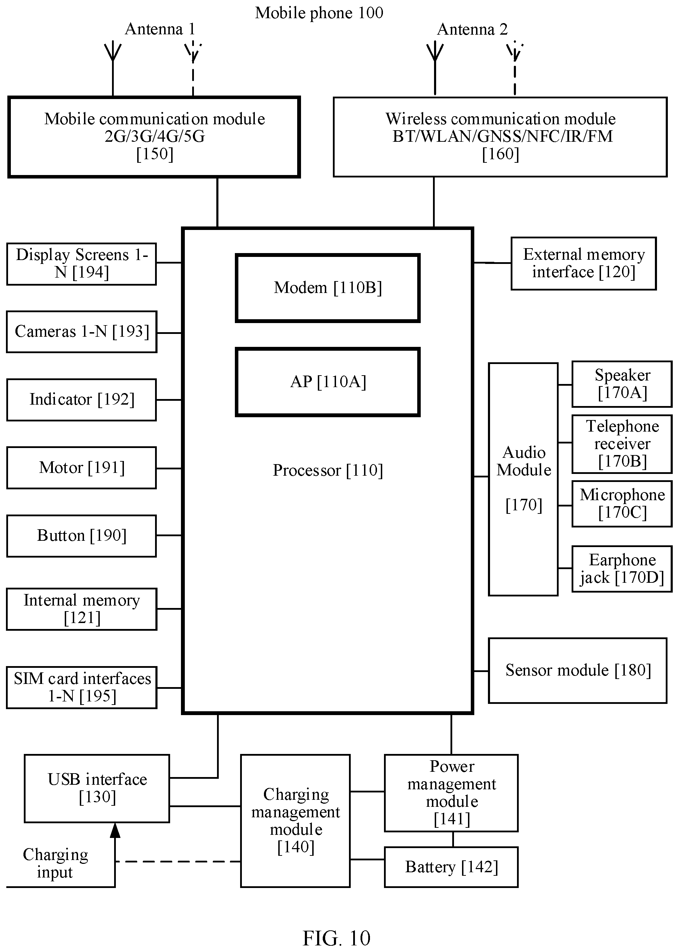

FIG. 10 is an example schematic diagram of a hardware structure of a mobile phone 100.

As shown in FIG. 10, the terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The antenna 1 and the antenna 2 are configured to transmit and receive an electromagnetic wave signal. Each antenna in the mobile phone 100 may be configured to cover one or more communication frequency bands. Different antennas may further be multiplexed to improve utilization of the antennas. For example, the antenna 1 may be multiplexed as a diversity antenna of a wireless local area network. In some other embodiments, the antenna may be used in combination with a tuning switch.

Specifically, in the embodiments of this application, a interaction between the network side (for example, an MME of a 4G network, an AMF of a 5G network, or a core network in another network) and the UE, that is, the mobile phone 100, may be implemented through the antenna 1 or the antenna 2. The interaction is, for example, TRACKING AREA UPDATE REQUEST, REGISTRATION REQUEST whose Type is MRU, TRACKING AREA UPDATE COMPLETE, REGISTRATION COMPLETE, a message/instruction in an RRC procedure, and a message/instruction in a random access procedure that are sent by the UE to the network side, as well as TRACKING AREA UPDATE ACCEPT, TRACKING AREA UPDATE REJECT, REGISTRATION ACCEPT, and REGISTRATION REJECT that are sent by the network side to the UE, or the like.

The mobile communication module 150 may provide a solution for wireless communication that is applied to the mobile phone 100 and that includes 2G/3G/4G/5G and the like. The mobile communication module 150 may include at least one filter, a switch, a power amplifier, a low noise amplifier (low noise amplifier, LNA), and the like. The wireless communication module 160 may provide a solution for wireless communication that is applied to the mobile phone 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like.

For example, in some implementations, it may be set that the antenna 1 of the mobile phone 100 is coupled to the mobile communication module 150, and the antenna 2 is coupled to the wireless communication module 160. Therefore, the mobile phone 100 may communicate with a network and another device by using a mobile communication technology or a wireless communication technology.

In addition, it should be noted that, in some implementations, the processor 110 may include one or more processing units. For example, the processor 110 may include an application processor (application processor, AP), a modem processor (Modem, which is alternatively referred to as baseband processor), a graphics processing unit (graphics processing unit, GPU), an image signal processor (image signal processor, ISP), a controller, a memory, a video codec, a digital signal processor (digital signal processor, DSP), a neural-network processing unit (neural-network processing unit, NPU), and the like.

It may be understood that, during specific implementation, different processing units may be separate devices or may be integrated into one or more processors.

It should be noted that specifically, in an actual application, the mobile phone 100 may implement the technical solutions provided in the embodiments of this application through two processing units: an AP 110A and a Modem 110B. For example, a location change of the user equipment is determined through the AP 110A, and then a corresponding driver in a kernel layer of the user equipment is invoked, to deliver the location update procedure to the Modem. The Modem may interact with the network side according to the processing logic involved in the location update method provided in the embodiments of this application. For specific implementation details, refer to the foregoing embodiments. Details are not described herein again.

In addition, it may be further understood that the processing unit, namely, the controller, included in the processor 110 may be a nerve center and a command center of the mobile phone 100. In an actual application, the controller may generate an operation control signal based on instruction operation code and a timing signal, to complete control of instruction fetching and instruction execution.

A wireless communication function of the mobile phone 100 may be implemented through the antenna 1, the antenna 2, the mobile communication module 150, the wireless communication module 160, the modem processor, and the like.

That's all about the hardware structure of the mobile phone 100. It should be understood that the mobile phone 100 shown in FIG. 10 is only an example. During specific implementation, the mobile phone 100 may have more or fewer components than those shown in the figure, or may combine two or more components, or may have a different component configuration. Various components shown in FIG. 10 may be implemented in hardware including one or more signal processing circuits and/or application-specific integrated circuits, software, or a combination of hardware and software.

In addition, it should be understood that, to implement the foregoing functions, the user equipment includes corresponding hardware and/or software modules for performing the functions. With reference to algorithm steps in examples described in embodiments disclosed in this specification, this application can be implemented in a form of hardware or a combination of hardware and computer software. Whether a function is implemented by hardware or computer software driving hardware depends on particular applications and design constraints of the technical solutions. A person of skill in the art may use different methods to implement the described functions with reference to the embodiments for each particular application, but it should not be considered that the implementation goes beyond the scope of this application.

In addition, it should be noted that, in an actual application scenario, the location update method provided in the foregoing embodiments implemented by the user equipment may alternatively be performed by a chip system included in the user equipment. Based on this, an embodiment of this application further provides a chip system, and the chip system may include a processor. The chip system may be coupled to a memory, so that the chip system invokes, when running, a computer program stored in the memory, to implement the foregoing steps performed by the user equipment. The processor in the chip system may be an application processor (such as the AP 110A shown in FIG. 10) or may be a non-application processor (such as the Modem 110B shown in FIG. 10).

In addition, an embodiment of this application further provides a computer-readable storage medium. The computer storage medium stores computer instructions, and when the computer instructions are run on a user equipment, the user equipment is enabled to perform the foregoing related method steps, to implement the location update method in the foregoing embodiments.

In addition, an embodiment of this application further provides a computer program product. When the computer program product is run on a user equipment, the user equipment is enabled to perform the foregoing related method steps, to implement the location update method in the foregoing embodiments.

In addition, as can be learned from the description, the user equipment, the computer-readable storage medium, the computer program product or the chip provided by the embodiment of the disclosure is configured to perform the corresponding method provided above. Therefore, for beneficial effects that can be achieved by the terminal device, the computer-readable storage medium, the computer program product, or the chip, refer to the beneficial effects in the corresponding method provided above. Details are not described herein again.

The foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A location update method, applied to a user equipment, wherein the method comprises:
triggering a location update procedure and starting a first timer and a second timer when the user equipment changes from camping on a first cell to camping on a second cell, wherein a current radio resource control RRC state of the user equipment is an idle state, duration corresponding to the second timer is greater than duration corresponding to the first timer, the duration corresponding to the first timer is duration for establishing an RRC connection between the user equipment and a core network through random access, the duration corresponding to the second timer is duration for performing the location update procedure, and the location update procedure is implemented based on the RRC connection;
disabling the second timer and starting a third timer after the first timer expires when the RRC connection is not successfully established within the duration corresponding to the first timer, wherein duration corresponding to the third timer is duration in which the user equipment fails to perform the location update procedure since the second timer is disabled; and
disabling the third timer in advance, re-triggering the location update procedure, and starting the first timer and the second timer when it is identified, within the duration corresponding to the third timer, that a preset condition is met.

2. The method according to claim 1, wherein the disabling the third timer in advance when it is identified, within the duration corresponding to the third timer, that a preset condition is met comprises:
disabling the third timer in advance when it is identified, within the duration corresponding to the third timer, that signal quality of the second cell becomes good, or the user equipment camps on a third cell.

3. The method according to claim 1 or 2, wherein the method further comprises:
when the location update procedure fails because the RRC connection is not successfully established, skipping counting the location update procedure that is triggered at this time towards a total trigger count corresponding to the location update procedure.

4. The method according to any one of claims 1 to 3, wherein the method further comprises:
re-triggering the location update procedure and starting the first timer and the second timer after the third timer expires when it is not identified, within the duration corresponding to the third timer, that the preset condition is met.

5. The method according to any one of claims 1 to 4, wherein in a process of re-triggering the location update procedure, the method further comprises:
when the RRC connection is successfully established and the location update procedure that is re-triggered fails, counting the location update procedure that is triggered at this time towards the total trigger count corresponding to the location update procedure; and
starting a fourth timer when the total trigger count is greater than a preset trigger count, wherein duration corresponding to the fourth timer is greater than the duration respectively corresponding to the first timer, the second timer, and the third timer, and
the user equipment fails perform the location update procedure within the duration corresponding to the fourth timer.

6. The method according to any one of claims 1 to 5, wherein
network corresponding to the first cell and the second cell are different;
or
the network corresponding to the first cell and the second cell are the same.

7. The method according to any one of claims 1 to 6, wherein when the network corresponding to the second cell is a 4G network, the location update procedure is implemented through tracking area update TAU, the first timer is a T300 timer, the second timer is a T3430 timer, and the third timer is a T3411 timer.

8. The method according to any one of claims 1 to 6, wherein when the network corresponding to the second cell is a 5G network, the location update procedure is implemented through a registration procedure whose type is mobile registration update MRU, the first timer is a T300 timer, the second timer is a T3510 timer, and the third timer is a T3511 timer.

9. The method according to any one of claims 5 to 8, wherein
when the network corresponding to the second cell is the 4G network, the fourth timer is a T3402 timer;
or
when the network corresponding to the second cell is the 5G network, the fourth timer is a T3502 timer.

10. The method according to any one of claims 1 to 9, wherein that it is identified that a preset condition is met comprises:
it is identified, when the user equipment moves rapidly, that the preset condition is met.

11. A user equipment, wherein the user equipment comprises a memory and a processor, the memory is coupled to the processor, the memory stores program instructions, and when the program instructions are executed by the processor, the user equipment is enabled to perform the location update method according to any one of claims 1 to 10.

12. A chip system, wherein the chip system comprises a processor, and the processor is configured to support a user equipment in implementing the location update method according to any one of claims 1 to 10.
